# EUROPÄISCHE PATENTANMELDUNG

(11) **EP 2 025 221 A1**
(43) Veröffentlichungstag der Anmeldung: **18.02.2009**
(21) Anmeldenummer: 08014342.3
(22) Anmeldetag: 12.08.2008
(51) Int. Cl.: A01K 5/01, A01K 15/02

(54) **Futter, Spiel- oder Trainingsvorrichtung**

(30) Priorität: 13.08.2007 DE 202007011290 U
(71) Anmelder: Hübl, Alois, 90513 Zirndorf (DE)
(72) Erfinder: Hübl, Alois, 90513 Zirndorf (DE)
(74) Vertreter: Schuhmann, Albrecht

(57) **Zusammenfassung**

Futter, Spiel- oder Trainingsvorrichtung für Tiere insbesondere Haustiere wie Hunde und Katzen, wobei die Vorrichtung aus einem Rohr (1) besteht, an welchem über einem der offenen Enden (3') ein federndes Mittel (2) angeordnet ist, welches dieses Rohrende (3') überdeckt.

## Beschreibung

Die Erfindung betrifft eine Futter, Spiel- oder Trainingsvorrichtung für Tiere, insbesondere Haustiere wie Hunde und Katzen

Es ist bekannt, dass beim Umgang mit Haustieren insbesondere bei der Haltung auch auf ausreichende Abwechslung für das Tier zu sorgen ist und diesem z.B. Spielzeug angeboten oder kleine Futterstückchen in einer Art Spiel verabreicht werden können, wozu es auch einige Spieleinrichtungen bzw. Vorrichtungen gibt.

Die DE 297 08 195 U1 offenbart dazu z.B. eine Vorrichtung, bzw. ein Tierspielzeug mit einer Aufnahme von stückiger Tiernahrung bei welcher das Tier einen Mechanismus betätigen muss um entsprechend an das Futterstück zu gelangen.

Andere bekannte Tierspielzeuge sind als beliebige Formen ausgebildete Kunststoffgegenstände, die teilweise auch Töne von sich geben und welche vom Tier herumgetragen oder herumgerollt werden sollen.

Die äußere Form solcher Spielgegenstände dürfte aber wohl mehr den Tierhalter als das Tier selber ansprechen.

Es hat sich gezeigt, dass der Reiz mit einer solchen Vorrichtung zu spielen beim Tier gesteigert wird, wenn z.B. kleine Futterstücke die Belohnung für ein erfolgreiches Spiel sind.

Insbesondere bei Katzen wird durch ein solches Spiel, dessen Ziel es ist ein Futterstück aus einem Gegenstand heraus zu holen, der Jagdinstinkt geweckt und deren Sinne trainiert.

Aufgabe der vorliegenden Erfindung ist es, eine Vorrichtung zu schaffen, die leicht handhabbar ist, wenig Bedienung erfordert und es erlaubt, dem Tier kleine Futterstücke in einem Spiel darzubieten und damit die Sinne, die Aufmerksamkeit und die Beweglichkeit des Tieres zu trainieren.

Diese Aufgabe wird mit den im kennzeichnenden Teil des Anspruchs 1 genannten Merkmalen gelöst. Fortbildungen und vorteilhafte Ausführungen der Erfindung sind in den weiteren Ansprüchen umfasst.

Erfindungsgemäß ist eine Vorrichtung aus einem Rohr bestehend, an welchem über einem der offenen Enden ein federndes Mittel angeordnet ist, welches dieses Rohrende überdeckt.

Das Mittel ist als ein federndes streifenförmiges Material unter dem Rohrende an der Außenseite des Rohres angebracht, z.B. durch anschrauben, ankleben oder anschweißen und verdeckt das eine Rohrende.

Bei senkrecht stehendem Rohr kann man nun nicht flüssige, kleine Gegenstände, wie Leckereien für das Haustier von oben in das Rohr geben und diese bleiben auf dem federnden Mittel liegen und können nicht durch das Rohr fallen. Durch einen leichten Druck auf das federnde Element nach unten wird dieses vom Rohrboden weggedrückt und einzelne Leckerei Stücke fallen zwischen dem Rohrboden und dem aufgeweiteten federnden Mittel heraus. Das Haustier erhält damit eine Belohnung für sein Tun. Alternativ kann das federnde Element auch nur leicht nach unten gedrückt und schnell wieder losgelassen werden und schnalzt beim loslassen desselben gegen den Rand des Rohres und stößt auch die, sich im Rohr befindlichen Gegenstände nach oben. Bei genügendem Druck auf das federnde Element ist die ausgeübte Kraft auf die Gegenstände im Rohr so groß, das einzelne davon nach oben aus dem Rohr ausgeworfen werden.

Auch dabei hat sich das Haustier eine Belohnung erarbeitet, welche oben aus dem Rohr herausfällt. Das Tier soll erkennen, dass ein Druck mit der Pfote auf den Streifen unter dem Rohr ein Stück Belohnung nach unten oder oben aus dem Rohr freigibt.

Das federnde Mittel kann nach einer Ausführung der Erfindung auch als ein mit einer Feder gespannter, in das Rohr ragender Stempel ausgeführt werden. Der Stempel weist dabei eine wagrechte Auflage auf, auf welche das Tier drücken kann und den mit der Feder beaufschlagten Stempel nach unten spannen kann. Beim loslassen schnalzt der Stempel nach oben in die Rohrinnenseite und katapultiert einzelne Stücke, ähnlich der Kugel bei einem Flipperautomaten, nach oben aus dem Rohr heraus.

Das Rohr selbst verfügt nach einer bevorzugten Ausführung der Erfindung über eine Befestigungsvorrichtung, welche fest mit dem Rohr verbunden sein kann. Bevorzugte Ausführungen der Vorrichtung weisen z.B. ein, in der Länge variables Gurtband, bevorzugt mit einem Klettverschluss auf, mittels welchem die Vorrichtung etwa an einem Katzen Kratzbaum befestigt werden kann. Zur Befestigung an diversen anderen Objekten können dafür auch Klammern, Clipse, Saugnäpfe oder ähnliche Befestigungseinrichtungen vorgesehen werden.

Alternativ kann das Rohr auch auf einer Halteplatte montiert sein, welche dann ihrerseits an einem Objekt oder z.B. einer Wand oder Türe befestigt werden kann.

Das Rohr der Futter, Spiel- oder Trainingsvorrichtung weist neben den beidseitigen Öffnungen an den Rohrenden, bevorzugt seitliche, auf der Umlauffläche eingebrachte Belüftungsöffnungen auf, damit die, sich im Rohr befindenden Lerereien, möglichst lange frisch bleiben.

Die gesamte Futter, Spiel- oder Trainingsvorrichtung, insbesondere das Rohr, sind bevorzugt aus Kunststoff und hier bevorzugt aus transparentem Kunststoff wie Plexiglas ausgeführt.

Im Folgenden wird die Erfindung anhand von Zeichnungen beispielhaft näher beschrieben. Dabei zeigen:
Fig. 1 eine perspektivische Darstellung der Vorrichtung
Fig. 2 eine perspektivische Darstellung der Vorrichtung mit einer Befestigungsvorrichtung
Fig. 3 eine Seitenansicht der Vorrichtung
Fig. 4 eine Vorderansicht der Vorrichtung auf einer Halteplatte

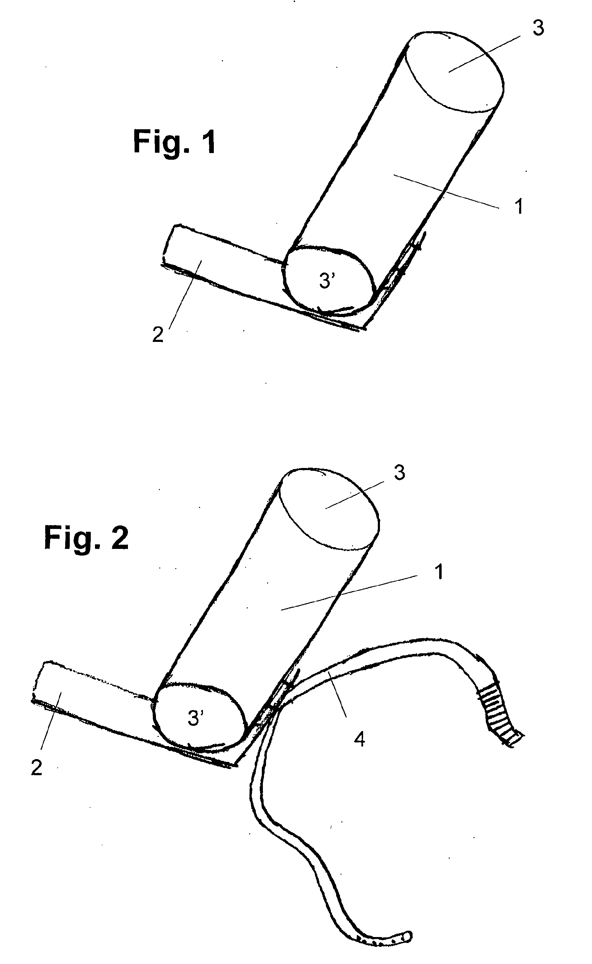

In Fig. 1 ist eine Futter, Spiel- oder Trainigsvorrichtung für Tiere gezeigt bei welcher zu erkennen ist, dass diese aus einem Rohr 1 besteht und über welchem an einem Rohrende 3'ein federndes Mittel 2, hier ein L-förmiger Plexiglasstreifen ragt, welcher mit einem seiner Schenkel an der Außenseite des Rohres 1 befestigt ist. Die Befestigung kann mittels Schrauben, Nieten, Kleben, Schweißen oder ähnlichen Verbindungsmethoden erfolgen.

Kleine Leckereien für das Haustier können von oben 3 in das Rohr 1 gegeben werden und fallen zum anderen Rohrende 3', wo sie auf der Oberseite des federnden Mittels 2 liegen bleiben.

Erst wenn das Tier das Ende des federnden Mittels 2 herunterdrückt, vergrößert sich der Spalt zwischen dem unteren Rohrboden 3' und dem federnden Mittel 2 und einzelne Leckereien fallen aus dem Rohr heraus und belohnen das Tier für seine Mühen.

Fig. 2 zeigt dieselbe Darstellung wie Fig. 1, jedoch mit einem angebrachten Befestigungsmittel, hier gezeigt als Gurtband mit z.B. Klettenden. Mit diesem Band kann die Vorrichtung z.B. um einen Katzen Kratzbaum gespannt und befestigt werden.

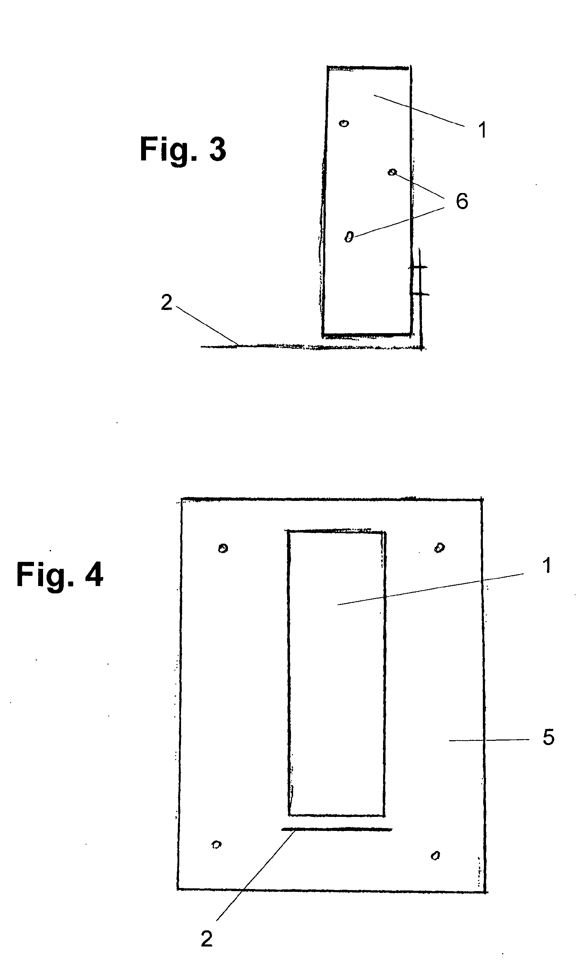

Fig. 3 zeigt eine Darstellung einer Futter, Spiel- oder Trainigsvorrichtung in welcher der Spalt zwischen dem federnden Mittel 2 und dem unteren Rohrende zu sehen ist aus weichem kein Gegenstand herausfallen kann, solange das Ende des federnden Mittels 2 nicht weiter herunter gedrückt wird.

In Fig. 4 ist eine Variante gezeigt in welcher die Futter, Spiel- oder Trainigsvorrichtung auf eine Halteplatte 5 befestigt ist, die ihrerseits wieder an einem Objekt, z.B. Wand oder Türe angebracht werden kann.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Futter, Spiel- oder Trainingsvorrichtung für Tiere insbesondere Haustiere wie Hunde und Katzen,
**dadurch gekennzeichnet,**
**dass** die Vorrichtung aus einem Rohr (1) besteht, an welchem über einem der offenen Enden (3, 3') ein federndes Mittel (2) angeordnet ist, welches dieses Rohrende (3') überdeckt.

2. Futter, Spiel- oder Trainingsvorrichtung nach Anspruch 1,
**dadurch gekennzeichnet,**
**dass** das federnde Mittel (2) als L-förmiges Materialstück ausgeführt ist, das mit seiner ersten Seite mit der Außenseite des Rohres (1) verbunden ist und mit seiner zweiten Seite über die Rohröffnung (3') ragt, wobei ein kleiner Abstand zwischen dem Rohrende und der zweiten Seite des L-förmigen Materialstückes (2) verbleibt.

3. Futter, Spiel- oder Trainingsvorrichtung nach Anspruch 1,
**dadurch gekennzeichnet,**
**dass** das federnde Mittel als Zugfeder mit einem in das Rohr ragenden Stempel ausgeführt ist.

4. Futter, Spiel- oder Trainingsvorrichtung nach Anspruch 1,
**dadurch gekennzeichnet,**
**das** das Rohr (1) mit einer Halte-, bzw. Befestigungsvorrichtung (4) ausgerüstet ist.

5. Futter, Spiel- oder Trainingsvorrichtung nach Anspruch 4,
**dadurch gekennzeichnet,**
**dass** die Halte-, bzw. Befestigungsvorrichtung (4) als Befestigungsplatte (5) zum anschrauben oder ankleben der Vorrichtung an einem Objekt ausgeführt ist.

6. Futter, Spiel- oder Trainingsvorrichtung nach Anspruch 4,
**dadurch gekennzeichnet,**
**dass** die Halte-, bzw. Befestigungsvorrichtung (4) als Klettband zum Befestigen der Vorrichtung an einem Objekt ausgeführt ist.

7. Futter, Spiel- oder Trainingsvorrichtung nach Anspruch 4,
**dadurch gekennzeichnet,**
**dass** die Halte-, bzw. Befestigungsvorrichtung (4) als Clip oder Klammer zur Befestigung der Vorrichtung an einem Objekt ausgeführt ist.

8. Futter, Spiel- oder Trainingsvorrichtung nach einem der vorherigen Ansprüche,
**dadurch gekennzeichnet,**
**dass** das Rohr (1) mit seitlichen Lüftungsbohrungen (6) ausgestattet ist.

9. Futter, Spiel- oder Trainingsvorrichtung nach einem der vorherigen Ansprüche,
**dadurch gekennzeichnet,**
**dass** das Rohr (1) und das federnde Mittel (2) aus Kunststoff ausgeführt sind.

10. Futter, Spiel- oder Trainingsvorrichtung nach einem der vorherigen Ansprüche,
**dadurch gekennzeichnet,**
**dass** das Rohr (1) und das federnde Mittel (2) aus transparentem Kunststoff ausgeführt sind.
